# EUROPEAN PATENT APPLICATION

(11) **EP 1 221 802 A2**
(43) Date of publication of application: **10.07.2002**
(21) Application number: 01306611.3
(22) Date of filing: 01.08.2001
(51) Int. Cl.: H04M 3/42

(54) **Personalized call-reception apparatus**

(30) Priority: 15.12.2000 US 738668
(71) Applicant: Avaya, Inc., Basking Ridge, NJ 07920 (US)
(72) Inventor: Achuthan, Ramesh, Denver, Colorado 80241 (US); Jensen, Kenneth B., Denver, Colorado 80218 (US); Chu, Jeffrey, Arvada, Coloradao 80007 (US)
(74) Representative: Williams, David John

(57) **Abstract**

A personalized call reception prompter (106 for a shared communications reception terminal (104) or for co-located communications reception terminals (104A-104X) enables the users (100-102) of the shared terminal or the co-located terminals to customize and prioritize (200-204) a list of callers, whereupon the prompter alerts the users to incoming calls in a distinctive manner that identifies both the intended recipient and the priority and/or source of the call. A user-programmable table (210) correlates (212) users' IDs (220) with callers' IDs (222) and with corresponding alerting signals or call priorities (224). The prompter uses (308) the caller ID of an incoming call to determine (310) the user ID and alerting signals or priority that are correlated in the table, with that caller ID. The prompter then generates (312) an alert that both identifies the correlated user as the intended recipient of the call and includes either the correlated alerting signals to identify the caller or indicates the correlated call priority.

## Description

### Technical Field

This invention relates to user communications terminals in general, and to alerting by such terminals of incoming communications in particular.

### Background of the Invention

When receiving a communication on a communications terminal that is either shared by a plurality of people―such as receiving a telephone call on a family's home telephone or receiving an e-mail on a family's computer―or co-located with other such instruments―such as a plurality of wireless phones carried by attendees at a meeting―the signal that is produced by the terminal to alert a user of the incoming communication does not instantly uniquely identify the intended recipient. Nor does it indicate the priority of the communication to the intended recipient.

Caller ID indirectly identifies the intended recipient, in that it displays the identity of the calling party, which can be used by the users who share the communications terminal to decide which one of them the communication is for. Standard Caller ID requires a user to locate the Caller ID device in order to read the display and interpret the displayed caller ID information. However, Talking Caller ID identifies all callers by text-to-speech, removing the need for a separate Caller ID box or CLID-equipped phone.

Distinctive ringing on a party line is used to identify the one of the telephones that shares use of the line for which the incoming call is intended. And MEWPRIC (Multiple Extension With Personal Ringing on Incoming Calls) operation is a party-line type of operation where telephones sharing a single station port are assigned different endpoint addresses. However, these are unable to indicate which one of a plurality of users who share one of those telephones the call is intended for.

Priority ringing is used in some office telephone system to signal to the call recipient the priority of the call. However, priority ringing is initiated by the caller and thus indicates the caller's estimation of the priority, not the call recipient's. Also, some office systems have a boss-secretary arrangement wherein distinctive ringing indicates whether a call is destined for the boss or the secretary of a boss-secretary team.

### Summary of the Invention

This invention is directed to solving these and other problems and disadvantages of the prior art. Illustratively according to the invention, a personalized alerting arrangement enables each one of a plurality of users of one or a plurality of communications terminals to customize and prioritize a list of communications sources (e.g., callers), whereupon the arrangement alerts the users to incoming communications in a distinctive manner that identifies both the intended recipient and the priority and/or source of the communication.

Generally according to one aspect of the invention, the alerting arrangement comprises a device for determining both (a) which of the plurality of users of the communications terminal is an intended recipient of a communication incoming to the terminal and (b) the priority or the source of the communication. It further comprises a device responsive to the determination, for effecting alerting of the users to the incoming communication in a manner indicating to the users both (a) the intended recipient and (b) the priority or the source. According to another aspect of the invention, the alerting arrangement comprises a device for determining both (a) which of a plurality of users is an intended recipient of an incoming communication and (b) the priority or the source of the communication. It further comprises a device responsive to the determination, for effecting alerting of the intended recipient to the incoming communication via an alerting signal that is unique to the intended recipient and that indicates to the intended recipient the priority or the source. In either case, the alerting arrangement may either be incorporated into a communications terminal or may be a separate apparatus. The device for determining may be a memory that stores information correlating the users with sources, plus associated circuitry or programs that either determine or receive the identity (e.g., caller ID) of the source of the incoming communication and use it to access corresponding information in the memory. The device for effecting alerting may either control the output of an alerting mechanism (e.g., ringer) of the communication terminal or a separate alert generator. The alerting may illustratively be a distinctive ringing sequence, a distinctive tone sequence, flashing lights, vibration, screen pop, or an announcement (software-generated, pre-recorded, or custom [user]-recorded).

The alerting arrangement provides a way to customize and prioritize a list of communications sources (e.g., callers) that one wishes to receive communications from. A collection of personal alerts can be generated. Each alert can be assigned to an individual source or to a group of services. The personal alerts can be custom recordings that both uniquely identify the source and the recipient with no further intervention by the recipient. The alerting arrangement is an advancement over traditional caller ID. Based on the priority of the communication, a different alert can be generated, including no alert. Instantly, the recipient can determine both if the call is for him or her and the call's source or priority. Using no alert is an effective mechanism for filtering out unwanted messages with no interruption of the recipient.

The invention can be used in both wired and wireless telephones that allow a user to record personal distinctive alerts and generate a group of priority assignments. The invention can also be a platform for a service offered by a service provider. The invention can be used in call centers to alert agents to high-priority callers. Moreover, the invention may be used with any and all forms of personal communications, such as email, fax, web chat, etc.

While the invention has been characterized in terms of apparatus, it also encompasses method that effects the described functionality of the apparatus. The apparatus preferably includes an effector―any entity that effects the corresponding step, unlike a means― for each method step. The invention further encompasses any computer-readable medium containing instructions which, when executed in a computer, cause the computer to perform the method steps.

These and other advantages and features of the invention will become more apparent from the following description of an illustrative embodiment of the invention considered together with the drawing.

### Brief Description of the Drawing

FIG. 1 is a block diagram of a first illustrative communications system that includes an illustrative embodiment of the invention;

FIG. 2 is a block diagram of a second illustrative communications system that includes an illustrative embodiment of the invention;

FIG. 3 is a block diagram of a data structure and a flow diagram of a corresponding initialization function of a personalized call reception prompter of the system of FIG. 1 or 2;

FIG. 4 is a flow diagram of a first illustrative embodiment of functionality of the prompter of the system of FIG. 1 or 2; and

FIG. 5 is a flow diagram of a second illustrative embodiment of functionality of the prompter of the system of FIG. 1 or 2.

### Detailed Description

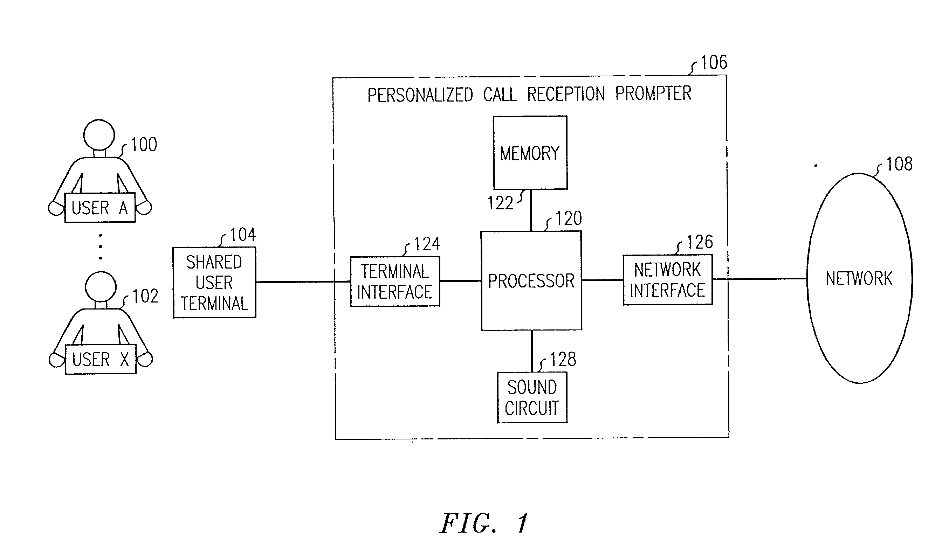

FIG. 1 shows an illustrative communications system comprising a communications network 108 connected to a communications terminal 104 whose use is shared by a plurality of users 100-102. The system of FIG. 1 may be any conceivable communications system, such as a telephone system where network 108 is a public or a private telephone network and terminal 104 is a telephone set, or an e-mail system where network 108 is a telephone or a data network and terminal 104 is a personal computer, or an Internet system where network 108 is the Internet and terminal 104 is a browser-equipped data terminal, etc. According to the invention, the system of FIG. 1 further includes a personalized call reception prompter 106 which is also connected to network 108. Prompter 106 is an alerting mechanism that alerts users 100-102 to incoming communications via distinctive alerting that indicates both who the communication is for and either who it is from or its priority to the recipient. Connection of prompter 106 to network 108 may be in series with terminal 104, as shown in FIG. 1, or it may be in parallel with terminal 104. Prompter 106 may be a stand-alone device, as shown in FIG. 1, or it may be integrated into terminal 104 or into network 108. Prompter 106 is preferably co-located on-premises with terminal 104―for example, both are located in a residence.

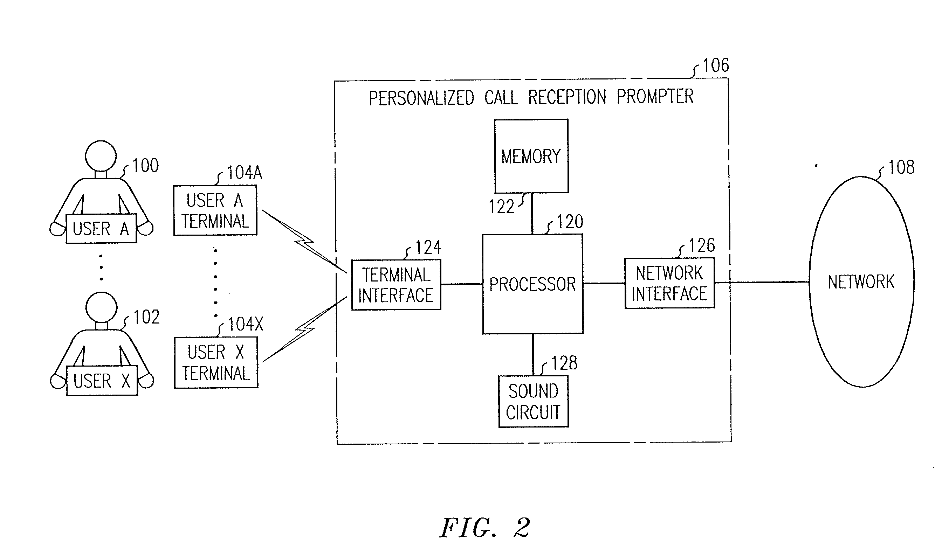

FIG. 2 shows an alternative embodiment of a communications system comprising the communications network 108 connected to a plurality of communications terminals 104A-104X each dedicated for use by a corresponding one of the users 100-102. The system of FIG. 2 may again be any conceivable communications system, but usually is a wireless communications system where user terminals 104A-104X are cellular telephones, wireless handsets, personal digital assistants (PDAs), etc. Prompter 106 may again be a stand-alone device, as shown in FIG. 2, but is usually integrated into a base station or a switching office of the wireless communications system. Alternatively, each terminal 104A-104X may include its own integrated prompter 106, in which case prompter 106 does not include terminal interface 124.

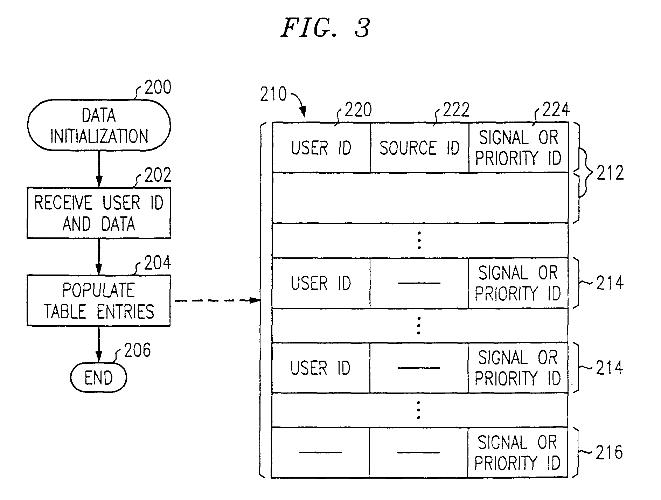

Prompter 106 is illustratively a stored-program controlled device. If a terminal 104 is likewise a stored-program controlled device, prompter 106 may be implemented as a control program stored in a memory and executing on a processor of that terminal 104. In the embodiment of FIGS. 1 and 2, prompter 106 comprises an interface 124 to terminal(s) 104, an interface 126 to network 108, a sound circuit 128 for generating prompting signals, a processor 120 for controlling the operation of interfaces 124 and 126 and of sound circuit 126, and a memory 122 for storing data and control programs for use by processor 120, illustrative examples of which are shown in FIGS. 3-5.

Memory 122 of prompter 106 stores a data structure (a table) 210, shown in FIG. 3, which contains one or more entries 212 each having a plurality of data fields 220-224. Entries 212 are created by users 100-102. A user ID field 220 stores the identifier of the one of the users 100-102 to whom it corresponds. A source ID field 222 stores the identifier of a source of communications, e.g., a caller ID. And a signal or priority ID field 224 identifies the prompt that is to be generated by prompter to alert a user 100-102 when a communication arrives from the identified source for the identified user. Field 224 identifies the prompt either directly via a signal ID, or indirectly via a priority ID which specifies the priority of communications arriving from the identified source. Each priority has a corresponding distinct prompt signal. Entries 212 include user default entries 214 which identify the signal or priority ID to be issued when a communication from an unknown source arrives for the identified user. Entries 212 further include a generic prompt entry 216 which identifies the signal or priority ID to be issued when a communication arrives for an unidentified user (e.g., from an unknown source). A specified prompt signal may be a null signal, i.e., no alert.

Each user 100-102 can populate his or her own entries 212 with data. To signal a desire to perform this operation to prompter 106, a user 100-102 initiates a data initialization function, at step 200, either directly via a user interface (not shown) of prompter 106 or indirectly via a user interface (not shown) of a terminal 104. Through interaction with prompter 106, user 100-102 supplies his or her user ID and other data to prompter 106, which receives the information, at step 202, and uses it to populate fields 220-224 of entries 212, at step 204. When initialization ends, at step 206, prompter 106 is ready for use.

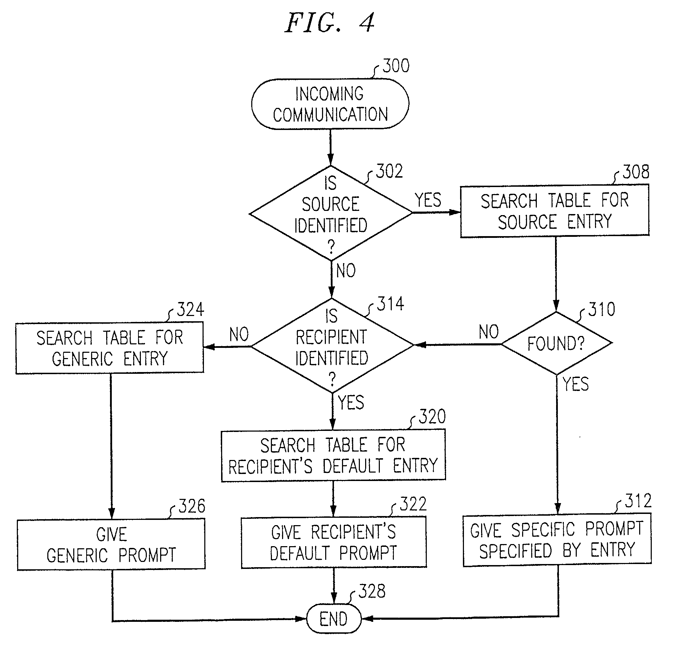

Use of prompter 106 consists of monitoring incoming communications and generating an appropriate alerting prompt to the one of the users 100-102 who is the intended recipient of an incoming communication. An illustrative example thereof is shown in FIG. 4. Upon detecting a communication incoming from network 108―ringing or a SETUP message, for example―at step 300, prompter 106 checks whether the arriving signals or message identify the source of the communication, at step 302. If so, prompter 106 searches table 210 for an entry 212 that identifies that source in source ID field 222, at step 310. If prompter 116 finds such an entry, as determined at step 310, it generates the specific prompt that is specified by that entry, at step 312. The prompt has two components: one that uniquely identifies the user 100-102 who is specified in that entry's user ID field 220, and another that uniquely corresponds either to the signal ID or to the priority ID specified in that entry's signal or priority ID field 224. The prompt can take any desired form. For example, it can be a distinct ringing cadence, or one or more distinct tones, or even an announcement such as "X, you have a call from Y". When a user responds to the prompt, e.g., by answering the communication on a terminal 104, or if the source terminates the communication before the user responds, prompter 106 ends its operation, at step 328, and further interaction between terminal 104 and network 108 takes place conventionally without intervention of prompter 106.

Returning to step 302, if prompter 106 determines that a source of the communication is not identified, or if prompter 106 determines at step 310 that an entry 212 in table 210 corresponding to the identified source cannot be found, prompter 106 checks whether the arriving signals or message specifically identifies one of the users 100-102 as the intended recipient of the communication, at step 314. If so, prompter 106 searches table 210 for the identified recipient's default entry 214, at step 320, and generates the recipient's default prompt that is specified therein, at step 322. The default prompt may be a null, i.e., no prompt. Prompter 106 then proceeds to step 328.

Returning to step 314, if the recipient of the communication is not identified, prompter 106 searches table 210 for the generic entry 216, at step 324, and gives the generic prompt that is specified therein. This prompt carries no information other than that a communication is arriving. The generic prompt may also be a null. Prompter 106 then proceeds to step 328.

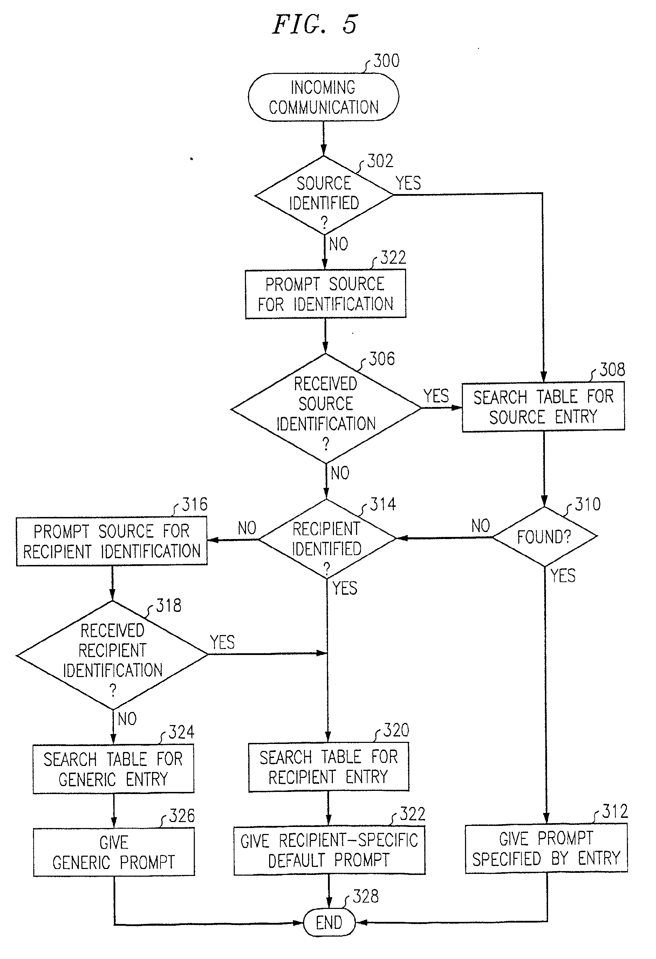

The functionality of prompter 106 may be extended to give prompter 106 the capability of communicating with a source of a communication on behalf of users 100-102. An illustrative example thereof is shown in FIG. 5, which is an expansion of FIG. 4 and uses the same numerals as FIG. 4 to identify steps that are common to both Figures. Upon detecting an incoming communication, at step 300, and determining that it does not identify the source, at step 302, prompter 106 prompts the source for its identification, at step 304. For example, prompter 106 answers an incoming telephone call and prompts the caller to enter his or her own telephone number. Or, prompter 106 sends back a query data message. If the source provides its identification in response to the query, as determined at step 306, prompter 106 proceeds to steps 308 et seq. If the source still does not provide its identification, as determined at step 306, or if an entry 112 corresponding to the identified source is not found at step 310, prompter 106 checks, at step 314, whether the incoming communication identifies the recipient. If so, prompter 106 proceeds to steps 320 et seq. If not, prompter 106 prompts the source for the identification of the recipient, at step 316. For example, prompter 106 plays a message to the caller stating "If you wish to speak to A, press one; if you wish to speak to X, press 2". If the source provides the recipient's identification, as determined at step 318, prompter 116 proceeds to steps 320 et seq.; if not, prompter 116 proceeds to steps 326 et seq.

Of course, various changes and modifications to the illustrative embodiment described above will be apparent to those skilled in the art. For example, a recipient and/or a sender of a communication may be determined by one or more of the following: PC "cookies" during Web chat, DNIS, character-recognition scan of a fax, and software interpretation of message text. Such changes and modifications can be made without departing from the spirit and the scope of the invention and without diminishing its attendant advantages. It is therefore intended that such changes and modifications be covered by the following claims except insofar as limited by the prior art.

## Claims

1. An apparatus (106) comprising:
means (120,122) for determining both (a) which of a plurality of users (100,102) of at least one communications terminal (104,104A,104X) is an intended recipient of an incoming communication and (b) at least one of a priority and a source of the communication; and
means (124,128) responsive to the determining means for effecting alerting of the users to the incoming communication in a manner indicating to the users both (a) the intended recipient and (b) the at least one of the priority and the source.

2. The apparatus of claim 1 wherein:
the determining means comprise
means for determining which one of a plurality of users of a communications terminal (104) that is shared by the plurality of users is the intended recipient of the communication incoming to the shared communications terminal.

3. The apparatus of claim 1 wherein:
the alerting means comprise
means (124,128) responsive to the determining means for effecting alerting of the intended recipient to the incoming communication via an alerting signal that is unique to the intended recipient and that indicates to the intended recipient the at least one of the priority and the source.

4. The apparatus of claim 1 wherein:
the means for effecting alerting comprise
means (124) for causing an alerting mechanism of a communications terminal to alert the intended recipient to the incoming communication in said manner.

5. The apparatus of claim 1 wherein:
the alerting comprises one of a distinctive ringing sequence, a distinctive tone sequence, an announcement, a visual signal, and a tactile signal.

6. The apparatus of claim 1 wherein:
the determining means comprise
means (120,126) for prompting the source for identification of at least one of the intended recipient, the priority, and the source.

7. The apparatus of claim 1 wherein:
the determining means comprise
means (122) for storing information (210) correlating sources of communications with the users and with either priorities or alerting signals corresponding to the sources, and
means (120) cooperative with the storing means and responsive to identifying a source of the incoming communication, for determining the user and either the priority or the alerting signal that are correlated in the storing means with the source of the incoming communication; and
the means for effecting alerting comprise
means (124,128) for effecting alerting via an alerting signal that indicates the determined correlated user and that either indicates the determined correlated priority or includes the determined correlated alerting signal.

8. A method comprising:
determining (308) both (a) which of a plurality of users (100,102) of at least one communications terminal (104,104A,104X) is an intended recipient of an incoming communication and (b) at least one of a priority and a source of the communication; and
in response to the determining, alerting (312) the users to the incoming communication in a manner indicating to the users both (a) the intended recipient and (b) the at least one of the priority and the source.

9. The method of claim 8 wherein:
determining comprises
determining which one of a plurality of users of a communications terminal (104) that is shared by the plurality of users is the intended recipient of a communication incoming to the shared communication terminal.

10. The method of claim 8 wherein:
alerting comprises alerting the intended recipient to the incoming communication via an alerting signal that is unique to the intended recipient and that indicates to the intended recipient the at least one of the priority and the source.
